# FASCICULE DE BREVET EUROPEEN

(11) **EP 0 481 894 B1**
(45) Date de publication et mention de la délivrance du brevet: **01.06.1994**
(21) Numéro de dépôt: 91402772.7
(22) Date de dépôt: 17.10.1991
(51) Int. Cl.: F16D 23/14

(54) **Montage pour l'assujettissement d'une butée à un diaphragme, notamment pour embrayage de véhicule automobile**
Befestigungsverfahren zur Montage eines Ausrücklagers auf eine Membranfeder, insbesondere für Kupplungen in Kraftfahrzeugen
Arrangement for mounting a release bearing on a diaphragm spring, especially for a clutch in an automotive vehicle

(30) Priorité: 19.10.1990 FR 9012945
(43) Date de publication de la demande: 22.04.1992
(73) Titulaire: VALEO, 75848 Paris Cédex 17 (FR)
(72) Inventeur: Hagnere, Raymond, F-80080 Amiens (FR); Regulski, Bernard, F-80600 Beauquesne (FR)
(74) Mandataire: Gamonal, Didier

(56) Documents cités:
- FR-A- 2 633 355
- GB-A- 2 193 284

## Description

La présente invention concerne d'une manière générale l'assujettissement d'une butée à un diaphragme, notamment lorsqu'il s'agit d'une butée de débrayage pour embrayage de véhicule automobile.

Elle vise plus particulièrement le cas où le montage correspondant est du genre mettant en oeuvre une pièce d'accostage, qui est propre à porter sur le diaphragme d'un premier côté de celui-ci, un jonc de couplage, qui, ouvert par une fente le long des bords de laquelle il présente en continu deux brins radiaux, est associé à la pièce d'accostage de manière à permettre l'encliquetage sur elle de la butée, et une rondelle élastique, qui, propre à porter sur le diaphragme de l'autre côté de celui-ci, est destinée à être attelée axialement, directement ou indirectement, à la pièce d'accostage, à travers le diaphragme.

Un montage de ce type se trouve notamment décrit dans le document FR-A-2.633.353.

La rondelle élastique mise en oeuvre y est une rondelle ondulée, et les brins radiaux du jonc de couplage, dûment décalés axialement par des coudes pour la contourner, permettent avantageusement d'agir de l'extérieur sur lui lorsqu'un découplage de la butée par rapport au diaphragme est nécessaire.

La disposition correspondante donne satisfaction.

Elle présente cependant l'inconvénient de conduire à un jonc de couplage de réalisation relativement complexe et d'encombrement axial non négligeable, en raison notamment des coudes de ses brins radiaux.

Pour supprimer ces coudes, et ainsi simplifier le jonc de couplage, il a été imaginé, par la demanderesse, dans une demande de brevet français No 90 03731, déposée le 23 Mars 1990 et non encore publiée, de remplacer par un pont l'une des ondulations de la rondelle élastique, en faisant en quelque sorte intervenir entre ces ondulations une césure à la faveur de laquelle il est possible d'avoir accès, à l'aide d'un outil, aux brins radiaux du jonc de couplage, ceux-ci s'étendant alors de manière rectiligne dans le plan de sa partie courante, au droit de cette rondelle élastique.

Lorsque, pour certaines applications au moins, la rondelle élastique mise en oeuvre est une rondelle Belleville, il est exclu de pouvoir y prévoir une telle césure.

La présente invention a pour objet un montage du genre concerné dans lequel peuvent cependant être conjointement mis en oeuvre une rondelle Belleville et un jonc de couplage de réalisation simple.

Ce montage est caractérisé en ce que, la rondelle élastique étant donc une rondelle Belleville, elle prend appui sur un capot annulaire, par l'intermédiaire duquel elle est attelée à la pièce d'accostage, et qui, au droit des brins radiaux du jonc de couplage, est ouvert par une fente donnant accès à ceux-ci.

Ainsi, suivant l'invention, la césure à mettre en oeuvre pour donner accès aux brins radiaux du jonc de couplage est reportée de la rondelle élastique à un capot dûment établi en conséquence.

La rondelle élastique peut ainsi avantageusement garder toute son intégrité, et ses caractéristiques élastiques restent avantageusement circulairement uniformes.

Conjointement, les brins radiaux du jonc de couplage peuvent avantageusement s'étendre de manière rectiligne dans le plan de sa partie courante, et, outre ces brins radiaux, ce jonc de couplage peut avantageusement ne comporter, radialement en saillie dans ce plan, pour sa retenue, qu'une ou plusieurs pattes formées chacune d'une simple déformation locale en demi-onde de cette partie courante.

La réalisation de ce jonc de couplage, aussi bien que sa mise en place, sont ainsi avantageusement simples et économiques.

En outre, du fait que ses brins radiaux sont dépourvus de coude et s'étendent à la faveur d'une fente du capot annulaire correspondant, il conduit avantageusement à un encombrement axial réduit pour l'ensemble.

Les caractéristiques et avantages de l'invention ressortiront d'ailleurs de la description qui va suivre, à titre d'exemple, en référence aux dessins schématiques annexés sur lesquels :
la figure 1 est, avec des arrachements locaux, une vue en élévation, suivant la flèche I de la figure 2, d'un embrayage mettant en oeuvre un montage suivant l'invention ;
la figure 2 est une vue en coupe axiale de cet embrayage, suivant la ligne brisée II-II de la figure 1 ;
la figure 3 reprend, à échelle supérieure, le détail de la figure 2 repéré par un encart III sur cette figure 2 ;
la figure 4 est, à l'échelle de la figure 3, une vue en élévation du jonc de couplage mis en oeuvre dans le montage suivant l'invention ;
la figure 5 est, de manière semblable, une vue en élévation, suivant la flèche V de la figure 6, de l'ensemble d'accostage auquel est intégré ce jonc de couplage pour le montage à réaliser ;
la figure 6 est une vue en coupe axiale de cet ensemble d'accostage, suivant la ligne brisée VI-VI de la figure 5 ;
la figure 7 est une vue en élévation, suivant la flèche VII de la figure 8, du capot annulaire complétant ce montage ;
la figure 8 est une vue en coupe axiale de ce capot annulaire, suivant la ligne brisée VIII-VIII de la figure 7 ;
la figure 9 reprend, à échelle supérieure, le détail de la figure 8 repéré par un encart IX sur cette figure 8 ;
la figure 10 reprend, à échelle encore supérieure, le détail de la figure 9 repéré par un encart X sur cette figure 9 ;
la figure 11 reprend, à l'échelle de la figure 9, le détail de la figure 8 repéré par un encart XI sur cette figure 8 ;
la figure 12 est, à l'échelle des figures 9 et 11, une vue partielle en plan du capot annulaire concerné, suivant la flèche XII de la figure 7.

Ces figures illustrent, à titre d'exemple, l'application de l'invention à un mécanisme d'embrayage 10, de type tiré, pour véhicule automobile.

Ce mécanisme d'embrayage 10 ne relevant pas de la présente invention, il ne sera pas décrit en détail ici.

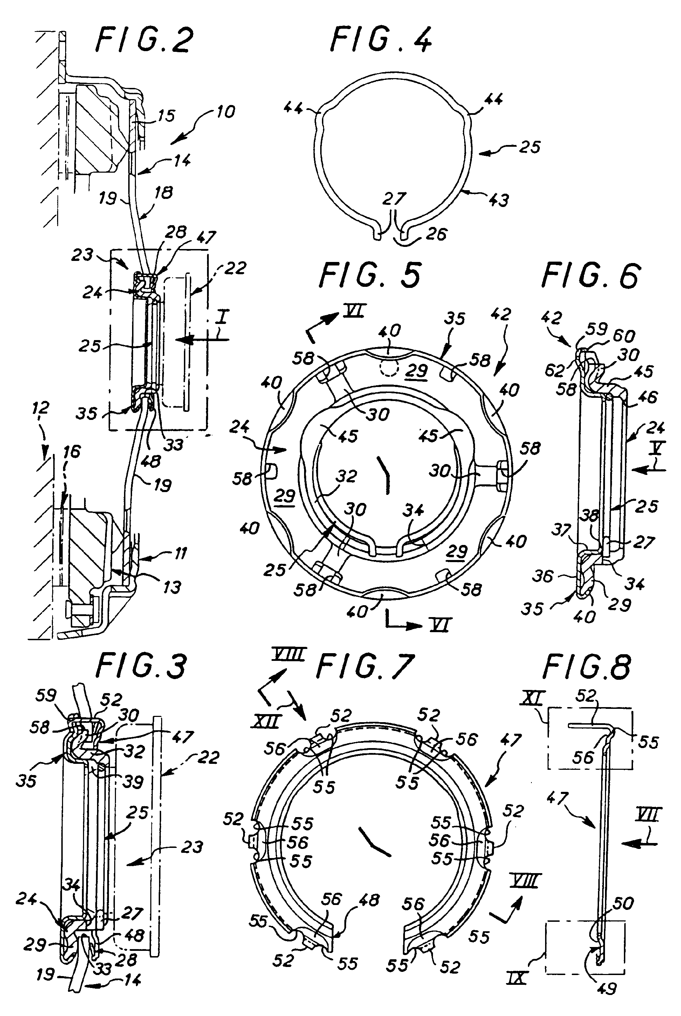

Il suffira d'indiquer qu'il comporte un couvercle 11, par lequel, tel que schématisé en traits interrompus à la figure 2, il peut être rapporté sur un plateau de réaction 12, un plateau de pression 13, qui est monté mobile axialement par rapport au couvercle 11 tout en étant calé en rotation sur celui-ci, et un diaphragme 14, qui, par une partie périphérique 15, formant rondelle Belleville, prend appui sur le couvercle 11 et porte sur le plateau de pression 13, pour serrage d'un disque de friction 16 entre celui-ci et le plateau de réaction 12, et qui, par une partie centrale 18 fragmentée en doigts radiaux 19 par des fentes 20, est destiné, pour le desserrage du disque de friction 16, à être soumis en traction, dans le sens opposé au plateau de réaction 12, à une butée de débrayage 22, également schématisée en traits interrompus, par son contour, sur la figure 2.

Il s'agit, globalement, ici, d'assujettir au diaphragme 14 cette butée de débrayage 22.

Le montage 23 correspondant met en oeuvre une pièce d'accostage 24, qui est propre à porter sur le diaphragme 14, d'un premier côté de celui-ci, en l'espèce du côté du plateau de réaction 12, un jonc de couplage 25, qui, ouvert par une fente 26 le long des bords de laquelle il présente en continu, en saillie vers l'extérieur, deux brins radiaux 27, est associé à la pièce d'accostage 24 de manière à permettre l'encliquetage sur elle de la butée 22, et une rondelle élastique 28, qui, propre à porter sur le diaphragme 14, de l'autre côté de celui-ci, en l'espèce du côté opposé au plateau de réaction 12, est destinée à être attelée axialement, directement ou indirectement, tel que précisé ultérieurement, à la pièce d'accostage 24, à travers le diaphragme 14.

Ici, la pièce d'accostage 24 présente, transversalement, une collerette 29, qui est de section transversale arrondie, et par laquelle elle est adaptée à porter sur le diaphragme 14, en étant calée en rotation sur ce diaphragme 14 par des emboutis locaux 30 venant chacun s'insérer entre deux doigts 19 de celui-ci, et, axialement, une douille 32, par laquelle elle traverse le diaphragme 14, en direction de la butée 22, à la faveur de l'ouverture centrale 33 de ce diaphragme 14, et sur la surface interne de laquelle intervient le jonc de couplage 25, cette douille 32 présentant localement, au droit des brins radiaux 27 de celui-ci, une échancrure 34 à la faveur de laquelle s'étendent radialement ces brins radiaux 27.

Ici, cette pièce d'accostage 24 est en tôle relativement épaisse et dûment emboutie.

Ici, il est associé, à cette pièce d'accostage 24, une pièce auxiliaire 35, qui, réalisée en tôle emboutie relativement plus mince, présente un flasque transversal 36 par lequel elle est accolée à la collerette 29 de cette pièce d'accostage 24, sur la surface de celle-ci tournée vers le plateau de réaction 12, et qui, par un retour axial 37 de ce flasque transversal 36 engagé dans la douille 32 de la pièce d'accostage 24 et terminé par un rebord transversal 38 dirigé vers l'axe de l'ensemble, forme, avec la pièce d'accostage 24, une cage de retenue 39 pour le jonc de couplage 25.

Ici, le flasque transversal 36 de cette pièce auxiliaire 35 est, de place en place, serti, à sa périphérie, sur la pièce d'accostage 24, par des pattes 40 contournant localement la collerette 29 de celle-ci.

L'ensemble forme ainsi conjointement, avec le jonc de couplage 25, une unité d'accostage 42, figure 6.

Du fait de sa fente 26, le jonc de couplage 25 est élastiquement déformable radialement.

Ici, les brins radiaux 27 de ce jonc de couplage 25 s'étendent dans le plan de sa partie courante 43, et, outre ces brins radiaux 27, ce jonc de couplage 25 ne comporte radialement en saillie dans ce plan qu'une ou plusieurs pattes 44 formées chacune d'une simple déformation locale en demi-onde de sa partie courante 43.

Ici, les pattes 44 sont au nombre de deux, elles sont chacune respectivement établies à 120° par rapport aux brins radiaux 27, et elles s'étendent chacune respectivement à la faveur d'emboutis 45, qui, prévus à cet effet localement à la surface interne de la douille 32 de la pièce d'accostage 24, favorisent une réduction de l'encombrement axial de celle-ci tout en lui conférant une bonne rigidité.

Initialement, figure 6, le jonc de couplage 25 s'étend au contact du rebord transversal 38 de la pièce auxiliaire 35.

Lors de l'accostage, c'est-à-dire lors de l'engagement axial relatif de l'unité d'accostage 42 sur la butée 22, l'extrémité d'attaque de la partie axiale de cette butée 22, dûment chanfreinée en conséquence, provoque une dilatation élastique en diamètre du jonc de couplage 25 à la faveur de laquelle celui-ci vient en prise avec une gorge prévue à cet effet sur cette partie axiale de la butée 22.

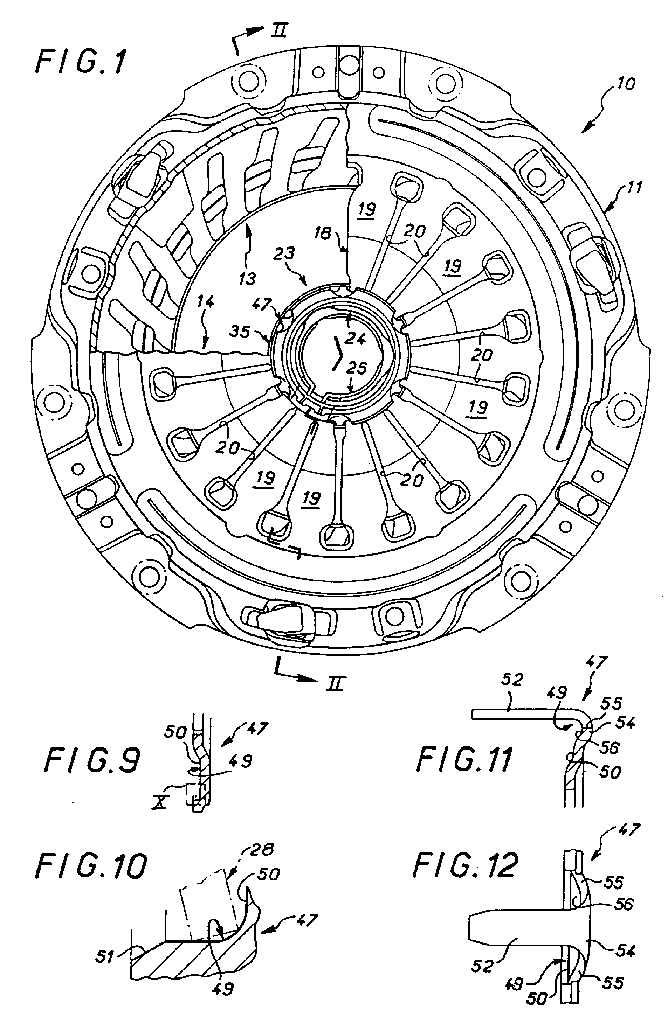

En service, c'est-à-dire lorsque la butée 22 exerce une traction sur le diaphragme 14, le jonc de couplage 25, dûment entraîné par cette butée 22, vient en appui contre un rebord transversal 46 que présente à cet effet à son extrémité la douille 32 de la pièce d'accostage 24, figures 1 et 2.

La pièce d'accostage 24 peut ainsi transmettre au diaphragme 14 la traction exercée par la butée 22.

Suivant l'invention, la rondelle élastique 28 est une rondelle Belleville, et elle prend appui sur un capot annulaire 47, par l'intermédiaire duquel elle est attelée à la pièce d'accostage 24, suivant des modalités décrites plus en détail ultérieurement, et qui, au droit des brins radiaux 27 du jonc d'accostage 25, est ouvert par une fente 48 donnant accès à ceux-ci.

Comme la pièce auxiliaire 35, ce capot annulaire 47, qui s'étend de l'autre côté de la collerette 29 de la pièce d'accostage 24 par rapport au flasque transversal 36 de la pièce auxiliaire 35, est en tôle relativement mince et dûment emboutie.

Ici, il présente axialement en creux, un logement annulaire 49 sur le fond 50 duquel porte la rondelle élastique 28, figure 10.

Pour faciliter la mise en place de la rondelle élastique 28, ce logement annulaire 49 s'ouvre à l'extérieur par un chanfrein 51 à son débouché.

A sa périphérie, le capot annulaire 47 présente des pattes 52 propres à son attelage à la pièce d'accostage 24, par l'intermédiaire, ici, du flasque transversal 36 de la pièce auxiliaire 35.

Ici, ces pattes 52 sont au nombre de six, et, pour le renfort du capot annulaire 47 à l'endroit de sa fente 48, il y a une telle patte 52 au voisinage immédiat de chacun des bords de cette fente 48.

Ici, chacune des pattes 52 du capot annulaire 47 se raccorde au fond 50 de son logement annulaire 49 par un large arrondi 54 par lequel elle contourne, à distance, la rondelle élastique 28.

A la racine de chacune de ces pattes 52, le capot annulaire 47 présente, disposées chacune respectivement de part et d'autre d'une telle racine, deux échancrures 55.

Ici, pour chacune des pattes 52 du capot annulaire 47, le large arrondi 54 présent à la racine d'une telle patte 52 résulte pour partie d'un embouti local 56 du fond 50 du logement annulaire 49 qui déborde circonférentiellement d'une telle racine, de part et d'autre de celle-ci, et les échancrures 55 correspondantes s'étendent chacune jusqu'aux limites de cet embouti local 56.

Pour le passage des pattes 52 du capot annulaire 47, la pièce d'accostage 24 présente, en nombre égal, à la périphérie de sa collerette 29, des encoches 58.

Ici, les emboutis 30 de cette collerette 29, qui sont au nombre de trois, sont établis, chacun respectivement, au droit, radialement, de trois de ces encoches 58, en étant sensiblement disposés à 120° deux à deux.

Conjointement, pour le passage des pattes 52 du capot annulaire 47, le flasque transversal 36 de la pièce auxiliaire 35 présente, en nombre égal, des perçages 59, au ras d'un rebord axial 60 par lequel il ceinture, le long de sa tranche, la collerette 29 de la pièce d'accostage 24.

Ici, les perçages 59 sont établis au fond d'emboutis locaux 62 du flasque transversal 36, qui, initialement, s'étendent en direction opposée à la collerette 29 de la pièce d'accostage 24, figure 6.

Après la réalisation du montage 23, c'est-à-dire après l'attelage, par ses pattes 52, du capot annulaire 47 à la pièce d'accostage 24 par l'intermédiaire du flasque transversal 36 de la pièce auxiliaire 35, avec repliement vers l'axe de l'ensemble de l'extrémité de ces pattes 52 au-delà des perçage 59 de ce flasque transversal 36, figures 2 et 3, ces emboutis locaux 62 du flasque transversal 36 viennent au contraire épouser la forme de cette collerette 29.

Dans le montage 23 ainsi réalisé, dont la compacité axiale est à souligner, la fente 48 du capot annulaire 47 se situe au droit de l'échancrure 34 de la douille 32 de la de la pièce d'accostage 24.

Elle donne donc accès aux brins radiaux 27 du jonc de couplage 25, qui, de ce fait, peuvent avantageusement avoir une hauteur relativement faible.

Pour découpler la butée 22 du diaphragme 14, il suffit d'écarter l'un de l'autre ces brins radiaux 27.

Si désiré, l'intervention correspondante peut se faire à l'aide d'une pince, non représentée.

Quoi qu'il en soit, la fente 48 du capot annulaire 47 a circonférentiellement une longueur suffisante pour permettre une telle intervention, et il en est de même pour l'échancrure 34 de la pièce d'accostage 24.

On appréciera que, par rapport au document FR-A-2633355, la présente invention permet de simplifier la piece d'accostage 24, celle-ci ne présentant pas à sa périphérie externe de pattes ou crans de retenue pour coopération avec le diaphragme.

Ici, ce sont les pattes 52 issues de la périphérie externe du capot 47, qui permettent une immobilisation en rotation de la pièce d'accostage par rapport au diaphragme.

De même, par rapport à ce document, la rondelle élastique est simplifiée et consiste en une simple rondelle Belleville 28 bien supportée par le fond 50 de grande portée du capot 47, sans risque d'interférence avec les pattes 52, grâce à l'arrondi 54 s'étendant radialement au-delà du fond 50. La charge exercée par cette rondelle 28 sur le diaphragme est donc plus précise, ladite rondelle 28 venant également s'appuyer par sa périphérie interne sur la collerette 29 de la pièce 24 en regard du sommet de l'arrondi de celle-ci.

On notera que la fente 48 apporte peu de perturbations pour la rondelle Belleville 28 et que la localisation des pattes 52 à l'endroit de la fente, outre une action de renforcement,permet également de s'opposer à un agrandissement de la fente 48.

De plus, les pattes 52 permettent un meilleur maintient de la pièce auxiliaire 35 en combinaison avec les pattes 40 qui évitent une interférence avec le diaphragme 18. Le repliement vers l'axe de l'ensemble de l'extrémité des pattes 52 est bénéfique.

Par rapport au document GB-A-2193284, la longueur de la butée de débrayage est diminuée.

En se rapportant à la figure 1 de ce document, on voit qu'une grande distance existe entre la bague externe du roulement de la butée de débrayage et l'extrémité de la douille de la pièce d'accostage.

Grâce à l'invention, cette distance est réduite et la butée de débrayage a un coût réduit. De plus, le jonc de couplage est simplifié, notamment les brins 27 sont de simple brins radiaux.

La rondelle élastique est également simplifiée avec une meilleure répartition des pressions du fait que la rondelle Belleville ne comporte pas de pattes. Le contact avec le diaphragme est plus ponctuel et cette rondelle 28 ne risque pas de s'échapper du fait de la présence du capot 47.

## Revendications

1. Montage pour l'assujettissement d'une butée à un diaphragme, notamment pour embrayage de véhicule automobile, comportant une pièce d'accostage (24), qui est propre à porter sur le diaphragme (14) d'un premier côté de celui-ci, un jonc de couplage (25), qui, ouvert par une fente (26) le long des bords de laquelle il présente en continu deux brins radiaux (27), est associé à la pièce d'accostage (24) de manière à permettre l'encliquetage sur elle d'une butée (22), et une rondelle élastique (28) qui, propre à porter sur le diaphragme (14) de l'autre côté de celui-ci, est destinée à être attelée axialement, directement ou indirectement, à la pièce d'accostage (24), caractérisé en ce que, la rondelle élastique (28) est une rondelle Belleville, qui prend appui sur un capot annulaire (47), par l'intermédiaire duquel elle est attelée à la pièce d'accostage (24), capot annulaire qui, au droit des brins radiaux (27) du jonc de couplage (25), est ouvert par une fente (48) donnant accès à ceux-ci.

2. Montage suivant la revendication 1, caractérisé en ce que le capot annulaire (47) présente, axialement en creux, un logement annulaire (49) sur le fond (50) duquel porte la rondelle élastique (28).

3. Montage suivant la revendication 2, caractérisé en ce que le capot annulaire (47) présente à sa périphérie des pattes (52) propres à son attelage à la pièce d'accostage (24), chacune de ces pattes (52) se raccordant au fond (50) dudit logement annulaire (49) par un large arrondi (54) par lequel elle contourne à distance la rondelle élastique (28).

4. Montage suivant l'une quelconque des revendications 1, 2, caractérisé en ce que le capot annulaire (47) présentant à sa périphérie externe des pattes (52) propres à son attelage à la pièce d'accostage (24), et en ce que il y a une telle patte (52) au voisinage immédiat de chacun des bords de sa fente (48).

5. Montage suivant l'une quelconque des revendications 3, 4, caractérisé en ce que, à la racine de chacune de ses pattes (52), le capot annulaire (47) présente, disposées chacune respectivement de part et d'autre d'une telle racine, deux échancrures (55).

6. Montage suivant les revendications 3 et 5, prises conjointement, caractérisé en ce que, pour chacune des pattes (52) du capot annulaire (47), le large arrondi (54) présent à la racine d'une telle patte (52) résulte pour partie d'un embouti local (56) du fond (50) du logement annulaire (49) qui déborde circonférentiellement d'une telle racine, de part et d'autre de celle-ci, et lesdites échancrures (55) s'étendent chacune jusqu'aux limites de cet embouti (56).

7. Montage suivant l'une quelconque des revendications 1 à 6, caractérisé en ce que le capot annulaire (47) est attelé à la pièce d'accostage (24) par l'intermédiaire d'un flasque transversal (36), qui, accolé à la pièce d'accostage (24), appartient à une pièce auxiliaire (35) formant avec celle-ci une cage de retenue (39) pour le jonc de couplage (25).

8. Montage suivant la revendication 7, caractérisé en ce que ledit flasque transversal (36) est serti sur la pièce d'accostage (24).

9. Montage suivant l'une quelconque des revendications 1 à 8, caractérisé en ce que la pièce d'accostage (24) présente axialement une douille (32), cette douille (32) présentant, audit droit des brins radiaux (27) du jonc de couplage (25), une échancrure (34) à la faveur de laquelle s'étendent ceux-ci.

10. Montage suivant l'une quelconque des revendications 1 à 9, caractérisé en ce que les brins radiaux (27) du jonc de couplage (25) s'étendent de manière rectiligne dans le plan de sa partie courante (43), et, en ce que outre ces brins radiaux (27), ledit jonc de couplage (25) ne comporte, radialement en saillie dans ce plan, qu'une ou plusieurs pattes (44) formées chacune d'une simple déformation locale en demi-onde de sa dite partie courante (43).

## Patentansprüche

1. Befestigungsverfahren zur Montage eines Ausrücklagers auf eine Membranfeder, insbesondere für Kupplungen in Kraftfahrzeugen, enthaltend ein Anstellstück (24), das geeignet ist, an der Membranfeder (14) auf einer ersten Seite aufzuliegen, einen Kopplungsring (25), der durch einen Spalt (26) geöffnet ist, an dessen Kanten entlang er durchgehend zwei radiale Endstücke (27) aufweist, und der so mit dem Anstellstück (24) verbunden ist, daß ein Ausrücklager (22) daran einrasten kann, sowie eine Federscheibe (28), die geeignet ist, an der Membranfeder (14) auf der anderen Seite aufzuliegen, und die dazu bestimmt ist, direkt oder indirekt, axial an dem Anstellstück (24) angekoppelt zu werden, **dadurch gekennzeich****net**, daß es sich bei der Federscheibe (28) um einen Belleville-Dichtungsring handelt, der auf einer ringförmigen Kappe (47) zur Auflage kommt, über die er an dem Anstellstück (24) angekoppelt wird, wobei diese ringförmige Kappe (47) auf der Höhe der radialen Endstücke (27) des Kopplungsrings (27) durch einen Spalt (48) geöffnet ist, der diese zugänglich macht.

2. Befestigungsverfahren nach Anspruch 1, **dadurch** **gekennzeichnet**, daß die ringförmige Kappe (47) axial vertieft eine ringförmige Aufnahme (49) aufweist, auf deren Boden (50) die Federscheibe (28) aufliegt.

3. Befestigungsverfahren nach Anspruch 2, **dadurch** **gekennzeichnet**, daß die ringförmige Kappe (47) an ihrer Peripherie Klammern (52) aufweist, mit denen sie an dem Kopplungsstück (24) angebracht werden kann, wobei sich jede dieser Klammern (52) an den Boden (50) der ringförmigen Aufnahme (49) durch eine breite Abrundung (54) anschließt, durch die sie die Federscheibe (28) mit Abstand umgibt.

4. Befestigungsverfahren nach einem der Ansprüche 1 oder 2, **dadurch gekennzeichnet**, daß die ringförmige Kappe (47) an ihrer Außenperipherie Klammern (52) aufweist, mit denen sie an dem Kopplungsstück (24) angebracht werden kann, und daß eine derartige Klammer (52) in unmittelbarer Nähe jeder der Kanten ihres Spalts (48) vorgesehen ist.

5. Befestigungsverfahren nach einem der Ansprüche 3 oder 4, **dadurch gekennzeichnet,** daß die ringförmige Kappe (47) an der Wurzel jeder ihrer Klammern (52) zwei Aussparungen (55) aufweist, die beiderseits einer derartigen Wurzel angeordnet sind.

6. Befestigungsverfahren nach den verbundenen Ansprüchen 3 und 5 , **dadurch gekennzeich****net**, daß zu jeder der Klammern (52) der ringförmigen Kappe (47) die breite Abrundung (54), die an der Wurzel einer derartigen Klammer (52) vorgesehen ist, teilweise aus einer örtlichen Vertiefung (56) des Bodens (50) der ringförmigen Aufnahme (49) hervorgeht, die am Kreisumfang von einer derartigen Wurzel beidseitig vorsteht, und daß sich die Aussparungen (55) jeweils bis zu den Grenzen dieser Vertiefung (56) erstrecken.

7. Befestigungsverfahren nach einem der Ansprüche 1 bis 6, **dadurch gekennzeichnet**, daß die ringförmige Kappe (47) an dem Anstellstück (24) über einen Querflansch (36) angebracht wird, der an das Anstellstück (24) angesetzt ist und zu einem Hilfsstück (35) gehört, mit dem er ein Haltegehäuse (39) für den Kopplungsring (25) bildet.

8. Befestigungsverfahren nach Anspruch 7, **dadurch** **gekennzeichnet**, daß der Querflansch (36) auf dem Anstellstück (24) aufgeklemmt ist.

9. Befestigungsverfahren nach einem der Ansprüche 1 bis 8, **dadurch gekennzeichnet,** daß das Anstellstück (24) axial eine Hülse (32) aufweist, wobei diese Hülse (32) auf der Höhe der radialen Endstücke (27) des Kopplungsrings (25) eine Aussparung (34) aufweist, durch die sich diese erstrecken.

10. Befestigungsverfahren nach einem der Ansprüche 1 bis 9, **dadurch gekennzeichnet,** daß sich die radialen Endstücke (27) des Kopplungsrings (25) geradlinig in der Ebene seines laufenden Teils (43) erstrecken und daß der Kopplungsring (25) neben diesen radialen Endstücken (27), radial in dieser Ebene vorstehend, nur eine oder mehrere Klammern (44) umfaßt, die jeweils durch eine einfache örtliche halbwellenförmige Verformung seines laufenden Teils (43) gebildet werden.

## Claims

1. An assembly for the attachment of a release bearing cup to a diaphragm, especially for a clutch in a motor vehicle, comprising a fitting piece (24), which is adapted to bear on the diaphragm (14) on a first side thereof; a coupling ring (25), which has an opening formed by a slot (26), and, along the edges of said slot, continuously has two radial ends (27), and which is joined to the fitting piece (24) so as to allow a release bearing cup (22) to be snapped onto it; and an elastic washer (28) which is adapted to bear on the diaphragm (14), on the other side thereof, and is intended to be attached axially, directly or indirectly, to the fitting piece (24),
**characterised in that** the elastic washer (28) is a Belleville washer, which rests on a annular cap (47), by means of which it is attached to the fitting piece (24), which annular cap, to the right of the radial ends (27) of the coupling ring (25), is open by a slot (48) giving access thereto.

2. An assembly according to Claim 1,
**characterised in that** the annular cap (47) axially has, in a recess, an annular seat (49) on the base (50) of which the elastic washer (28) bears.

3. An assembly according to Claim 2,
**characterised in that** on its periphery the annular cap (47) has lugs (52) for its attachment to the fitting piece (24), each of these lugs (52) being connected to the base (50) of said annular seat (49) by a wide rounded-off part (54) by which it, at a distance, curves around the elastic washer (28).

4. An assembly according to any one of Claims 1, 2,
**characterised in that** at its external periphery the annular cap (47) has lugs (52) for the attachment of said cap to the fitting piece (24),
**and in that** there is such a lug (52) in the immediate vicinity of each of the edges of its slot (48).

5. An assembly according to any one of Claims 3, 4,
**characterised in that** at the root of each of its lugs (52), the annular cap (47) has two notches (55), each being respectively disposed on either side of such a root.

6. An assembly according to Claims 3 and 5, taken together,
**characterised in that** for each of the lugs (52) of the annular cap (47), the wide rounded-off part (54) present at the root of such a lug (52) partially results from a local pressed part (56) at the base (50) of the annular seat (49) which circumferentially protrudes from such a root, on either side thereof, and the said notches (55) extend to the limits of said pressed part (56).

7. An assembly according to any one of Claims 1 to 6,
**characterised in that** the annular cap (47) is attached to the fitting piece (24) by means of a transversal flange (36), which is attached to the fitting piece (24) and belongs to an auxiliary piece (35) forming therewith a retention case (39) for the coupling ring (25).

8. An assembly according to Claim 7,
**characterised in that** the said transversal flange (36) is crimped onto the fitting piece (24).

9. An assembly according to any one of Claims 1 to 8,
**characterised in that** the fitting piece (24) axially has a sleeve (32), this sleeve (32) having, to the right of the radial ends (27) of the coupling ring (25), a notch (34) by means of which said ends extend.

10. An assembly according to any one of Claims 1 to 9,
**characterised in that** the radial ends (27) of the coupling ring (25) extend in a rectilinear manner in the plane of its standard part (43),
**and in that**, apart from these radial ends (27), the said coupling ring (25) only comprises, radially protruding in this plane, one or more lugs (44), each formed of a simple local half-wave deformation of its said standard part (43).
